# FASCICULE DE BREVET EUROPEEN

(11) **EP 1 603 791 B1**
(45) Date de publication et mention de la délivrance du brevet: **31.01.2007**
(21) Numéro de dépôt: 04720029.0
(22) Date de dépôt: 12.03.2004
(51) Int. Cl.: B62D 43/10

(54) **BAC POUR ROUE DE SECOURS ET STRUCTURE ARRIERE DE VEHICULE COMPORTANT LEDIT BAC**
ERSATZRADBEHÄLTER UND RÜCKWÄRTIGE KONSTRUKTIONSAUSFÜHRUNG EINES MIT DEM BEHÄLTER VERSEHENEN FAHRZEUGS
SPARE WHEEL CONTAINER AND THE REAR STRUCTURAL DESIGN OF A VEHICLE PROVIDED WITH SAID CONTAINER

(30) Priorité: 19.03.2003 FR 0303337
(43) Date de publication de la demande: 14.12.2005
(73) Titulaire: Renault s.a.s., 92100 Boulogne Billancourt (FR)
(72) Inventeur: VIVERO, François, F-78150 Le Chesnay (FR)
(86) Numéro de dépôt international: PCT/FR2004/000614
(87) Numéro de publication internationale: WO 2004/085232

(56) Documents cités:
- EP-A- 0 270 097
- DE-A- 3 000 666
- DE-A- 3 531 543
- US-A- 5 941 432
- US-A1- 2001 020 796

## Description

L'invention concerne un bac pour roue de secours et une structure arrière de véhicule comportant ledit bac.

Les bacs pour roue de secours utilisés actuellement dans les véhicules automobiles sont soit entièrement en métal, soit entièrement en matière plastique.

Les bacs en métal sont fixés sur les structures arrière des véhicules par soudage, dans des installations des chaînes de montage. Ils présentent toutefois l'inconvénient d'être lourds. Les bacs en matière plastique sont beaucoup plus légers mais nécessitent une fixation particulière à la structure arrière du véhicule, une soudure étant impossible. Il s'agit souvent d'une opération longue de masticage ou de collage entre le bac et la structure.

L'invention vise à pallier ces inconvénients en proposant un bac léger pouvant être facilement fixé à une structure arrière de véhicule automobile.

A cet effet, un premier objet de l'invention concerne un bac pour roue de secours comprenant un support de fixation métallique destiné à assurer la fixation du bac dans un véhicule et un logement en matière plastique apte à recevoir une roue de secours, le support et le logement étant solidaires. Le bac est ainsi considérablement allégé par rapport aux bacs métalliques. Le support en métal permet une fixation aisée sur la structure du véhicule. Il peut être par exemple vissé ou riveté ou encore soudé au véhicule.

Le support métallique est solidaire du bord du logement. Le document DE 35 31 543 décrit un tel bac pour roue de secours. Ainsi, lorsqu'il est placé dans le véhicule, le bac ne dépasse pas au-dessus de la surface supportant le support, ce qui permet une utilisation optimale de cette surface, qui forme généralement le plancher d'un coffre à bagages.

Le support métallique est noyé dans la matière plastique du logement, par exemple lors de la fabrication du bac.

Dans un mode de réalisation, le support comprend au moins deux pattes situées de part et d'autre du logement, afin d'assurer la stabilité du bac. Dans un autre mode de réalisation, le support s'étend sur la majeure partie du pourtour du logement.

Avantageusement, le logement présente un système de maintien de la roue de secours. En particulier, le système de maintien peut comprendre une tige filetée saillant du fond du logement et au moins un écrou coopérant avec ladite au moins une tige filetée.

Un autre objet de l'invention concerne une structure arrière de véhicule automobile comprenant au moins deux longerons s'étendant sensiblement horizontalement, et un bac selon l'invention, le support dudit bac étant fixé sur lesdits longerons.

Avantageusement, le support dudit bac est soudé sur lesdits longerons. Le bac selon l'invention peut alors être fixé à la structure arrière en utilisant les mêmes installations de soudage que celles existant pour les bacs métalliques. Différents types de véhicules peuvent alors être équipés de bacs selon l'invention ou de bacs métalliques sur une même chaîne de montage, sans nécessiter de modifications de cette dernière, permettant un gain de temps au montage.

L'invention est maintenant décrite en référence aux dessins annexés, non limitatifs, dans lesquels :
- la figure 1 est une vue en perspective d'un mode de réalisation du bac selon l'invention ;
- la figure 2 est une vue en coupe transversale schématique du bac de la figure 1 comportant une roue de secours.

En référence aux figures, un bac 10 de rangement pour une roue de secours comprend un support de fixation 12 métallique et un logement 14 en matière plastique. Le support 12 est destiné à assurer la fixation du bac dans un véhicule, tandis qu'une roue de secours 8 est logée dans le logement 14.

Le logement 14 présente un fond 16, de forme sensiblement circulaire, et des parois latérales 18. Il est suffisamment grand pour pouvoir recevoir complètement une roue de secours 8 reposant à plat sur le fond 16. Dans le mode de réalisation représenté, le logement 14 est tel que le bord supérieur 19 des parois latérales 18 forme sensiblement un carré. Bien entendu, d'autres formes peuvent être envisagées en fonction de l'environnement du bac.

Le support 12 s'étend dans un plan sensiblement parallèle au fond 16 du logement, sur tout le pourtour du bord supérieur 19 des parois latérales 18. Il est solidaire de ce bord supérieur 19. La fixation du support sur le bord du logement est par exemple réalisée lors de la fabrication du logement 14, par exemple par moulage. Le support 12 est alors noyé dans l'épaisseur du bord 19. Afin de renforcer la liaison, la partie du support noyée dans la matière plastique peut présenter des trous qui seront remplis par la matière et/ou des surfaces irrégulières.

Bien entendu, d'autres modes de fixation peuvent être réalisés, par exemple par vissage, rivetage ou analogues. A cet effet, le bord 19 du logement peut présenter un rebord s'étendant dans le même plan que le support et sur lequel ce dernier pourra être fixé. Le support s'étend sur une surface suffisante pour permettre une fixation correcte du bac dans le véhicule.

Le support 12 présente quatre pattes 20, 22, 24, 26 s'étendant respectivement le long des quatre parois latérales 18 du logement, de sorte qu'elles forment des appuis opposés deux à deux pour le bac. Dans le mode de réalisation représenté, ces pattes sont solidaires entre elles, on pourrait toutefois envisager des pattes distinctes les unes des autres, ou une pluralité de pattes réparties sur le pourtour du bord 19 du logement. Les pattes 20, 22, 24 présentent également sur leur bord libre un rebord 28.

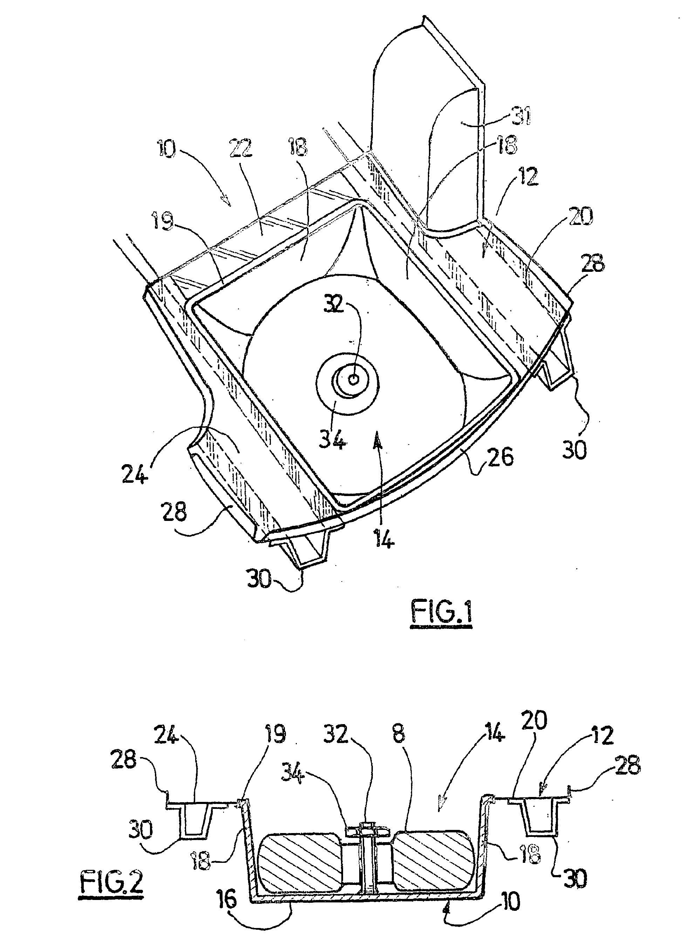

Le bac 10 selon l'invention est destiné à être fixé sur la structure arrière d'un véhicule automobile, tel que par exemple le plancher. A cet effet, la structure arrière comprend au moins deux longerons 30 s'étendant suivant la direction longitudinale du véhicule. Ces longerons sont représentés partiellement et schématiquement sur les figures. Le support 12 du bac 10 repose sur les longerons 30. Dans l'exemple, deux pattes opposées 20 et 24 du support 12 reposent sur les longerons. A cet effet, les longerons 30 sont suffisamment distants l'un de l'autre suivant la direction transversale du véhicule pour permettre de placer entre eux le logement 14 du bac. Ils présentent une section transversale sensiblement en forme de Ω renversé, tel que visible sur les figures. Chaque patte 20, 24 du support repose ainsi sur les pieds du Ω de chaque longeron 30. Le support 12 est alors fixé sur les longerons par soudage des pattes 20, 24, qui, à cet effet, présentent une surface suffisante. Les zones de soudure (non visibles) sont schématisées par des hachures s'étendant suivant la direction longitudinale des pattes 20, 24, sur la figure 1.

Le bac 10 est par exemple situé en partie entre les passages de roue 31 du véhicule. Sur la figure 1, un seul passage de roue 31 est représenté pour plus de clarté. A cet effet, les contours extérieurs des pattes 20, 24 épousent la forme des passages de roue 31. Les rebords 28 des pattes 20, 24 peuvent alors être soudés sur ces derniers. Dans le mode de réalisation représenté, le bac 10 présente un plan de symétrie vertical s'étendant suivant la direction longitudinale du véhicule à mi-distance des passages de roue.

Les autres pattes peuvent être fixées à d'autres parties de la caisse du véhicule. Les rebords 28 des pattes 20, 22, 24 peuvent également être soudés sur d'autres parties de la structure arrière du véhicule, afin d'assurer la fixation et la rigidité du bac par rapport à la structure.

De nombreux autres modes de réalisation du support de fixation peuvent être envisagés. Notamment, la forme et les dimensions du support peuvent être choisies en fonction de la géométrie et de la structure arrière du véhicule sur laquelle le bac doit être fixé.

Afin de fixer la roue de secours 8 dans le logement 14 et d'éviter qu'elle ne bouge, le bac 10 comporte également des moyens de maintien. En référence à la figure 2, une tige filetée 32 moulée d'une pièce avec le fond 16 du logement fait saillie dans ce dernier. Elle coopère avec un écrou 34 amovible. Cette tige filetée 32 est placée au centre du fond 16 afin de pouvoir être introduite dans la partie centrale d'une roue de secours 8 placée dans le logement. Elle est suffisamment longue pour qu'un écrou 34 puisse être vissé sur la tige 32 au-dessus de la roue 8 de façon à bloquer celle-ci contre le fond 16, tel que représenté figure 2.

Bien entendu, d'autres modes de réalisation des moyens de maintien peuvent être envisagés. Par exemple, plusieurs tiges filetées peuvent être prévues, espacées de façon à correspondre aux emplacements des boulons de fixation de la roue.

## Revendications

1. - Bac (10) pour roue de secours (8) comprenant un support de fixation métallique (12) destiné à assurer la fixation du bac dans un véhicule et un logement en matière plastique (14) apte à recevoir une roue de secours (8), le support et le logement étant solidaires, **caractérisé en ce que** le support métallique (12) est noyé dans la matière plastique du logement (14).

2. - Bac selon la revendication 1, **caractérisé en ce que** le support métallique (12) est solidaire du bord (19) du logement (14).

3. - Bac selon l'une des revendications 1 ou 2, **caractérisé en ce que** le support comprend au moins deux pattes (20, 22, 24, 26) situées de part et d'autre du logement.

4. - Bac selon l'une des revendications 1 ou 2, **caractérisé en ce que** le support s'étend sur la majeure partie du pourtour du logement.

5. - Bac selon l'une des revendications précédentes, **caractérisé en ce que** le logement présente un système de maintien de la roue de secours.

6. - Bac selon la revendication 5, **caractérisé en ce que** le système de maintien comprend au moins une tige filetée (32) saillant du fond (16) du logement et au moins un écrou (34) coopérant avec ladite au moins d'une tige filetée.

7. - Structure arrière de véhicule automobile comprenant au moins deux longerons (30) s'étendant sensiblement longitudinalement, et un bac (10) selon l'une des revendications précédentes, le support (12) dudit bac étant fixé sur lesdits longerons.

8. - Structure arrière selon la revendication 7, **caractérisé en ce que** le support (12) dudit bac est soudé sur lesdits longerons (30).

## Claims

1. Container (10) for spare wheel (8) comprising a metal mounting bracket (12) intended to provide the mounting of the container in a vehicle and a housing made of plastic material (14) able to receive a spare wheel (8), the bracket and the housing being connected, **characterized in that** the metal bracket (12) is embedded in the plastic material of the housing (14).

2. Container according to Claim 1, **characterized in that** the metal bracket (12) is connected to the edge (19) of the housing (14).

3. Container according to either of Claims 1 or 2, **characterized in that** the bracket comprises at least two lugs (20, 22, 24, 26) located on either side of the housing.

4. Container according to either of Claims 1 or 2, **characterized in that** the bracket extends over the major portion of the circumference of the housing.

5. Container according to one of the preceding claims, **characterized in that** the housing has a system for retaining the spare wheel.

6. Container according to Claim 5, **characterized in that** the retaining system comprises at least one threaded rod (32) projecting from the bottom (16) of the housing and at least one nut (34) cooperating with said at least one threaded rod.

7. Rear structural design of a motor vehicle comprising at least two side members (30) extending generally longitudinally, and a container (10) according to one of the preceding claims, the bracket (12) of said container being mounted on said side members.

8. Rear structural design according to Claim 7, **characterized in that** the bracket (12) of said container is welded to said side members (30).

## Patentansprüche

1. Behälter (10) für ein Ersatzrad (8) mit einem metallischen Befestigungshalter (12), der die Befestigung des Behälters in einem Fahrzeug gewährleisten soll, und einer Aufnahme (14) aus Kunststoffmaterial, die ein Ersatzrad (8) aufnehmen kann, wobei der Halter und die Aufnahme fest miteinander verbunden sind, **dadurch gekennzeichnet, dass** der metallische Halter (12) in dem Kunststoffmaterial der Aufnahme (14) eingelassen ist.

2. Behälter nach Anspruch 1, **dadurch gekennzeichnet, dass** der metallische Halter (12) fest mit dem Rand (19) der Aufnahme (14) verbunden ist.

3. Behälter nach Anspruch 1 oder 2, **dadurch gekennzeichnet, dass** der Halter mindestens zwei Ansätze (20, 22, 24, 26) umfasst, die sich auf beiden Seiten der Aufnahme befinden.

4. Behälter nach Anspruch 1 oder 2, **dadurch gekennzeichnet, dass** sich der Halter über den Hauptteil des Umfangs der Aufnahme erstreckt.

5. Behälter nach einem der vorhergehenden Ansprüche, **dadurch gekennzeichnet, dass** die Aufnahme ein System zum Festhalten des Ersatzrades aufweist.

6. Behälter nach Anspruch 5, **dadurch gekennzeichnet, dass** das System zum Festhalten mindestens eine vom Boden (16) der Aufnahme vorstehende Gewindestange (32) und mindestens eine mit der mindestens einen Gewindestange zusammenwirkende Mutter (34) umfasst.

7. Rückwärtige Konstruktion eines Kraftfahrzeugs mit mindestens zwei Längsträgern (30), die sich im Wesentlichen in Längsrichtung erstrecken, und einem Behälter (10) nach einem der vorhergehenden Ansprüche, wobei der Halter (12) des Behälters an den Längsträgern befestigt ist.

8. Rückwärtige Konstruktion nach Anspruch 7, **dadurch gekennzeichnet, dass** der Halter (12) des Behälters mit den Längsträgern (30) verschweißt ist.
